# EUROPÄISCHE PATENTANMELDUNG

(11) **EP 3 324 217 A1**
(43) Veröffentlichungstag der Anmeldung: **23.05.2018**
(21) Anmeldenummer: 17196936.3
(22) Anmeldetag: 17.10.2017
(51) Int. Cl.: G01V 8/10, G01V 8/12

(54) **OPTISCHER SENSOR UND VERFAHREN ZUM ÜBERWACHEN EINES ÜBERWACHUNGSBEREICHS**

(30) Priorität: 21.11.2016 DE 102016122364
(71) Anmelder: Sick AG, 79183 Waldkirch (DE)
(72) Erfinder: JAHN, Axel, 79183 Waldkirch (DE)

(57) **Zusammenfassung**

Es wird ein optoelektronischer Sensor (10), insbesondere Lichtgitter, zur Überwachung eines Überwachungsbereichs (22) angegeben, wobei der Sensor mindestens einen Lichtsender (14) zum Aussenden eines Überwachungsstrahls (20), mindestens einen Lichtempfänger (18) zum Empfangen des Überwachungsstrahls (20) und Erzeugen eines entsprechenden Empfangssignals und eine Auswertungseinheit (26) aufweist, um aus dem Empfangssignal zu erkennen, ob der Überwachungsstrahl (20) unterbrochen ist und bei Erkennen einer unzulässigen Unterbrechung des Überwachungsstrahls (20) ein Unterbrechungssignal auszugeben. Dabei ist der Lichtempfänger (18) derart ausgebildet, dass das Empfangssignal von der Geometrie des von dem Überwachungsstrahl (20) auf dem Lichtempfänger (18) erzeugten Lichtflecks (30) abhängig ist, und die Auswertungseinheit (26) dafür ausgebildet ist, aus dem Empfangssignal zu erkennen, ob der nicht unterbrochene Überwachungsstrahl (20) manipuliert ist.

## Beschreibung

Die Erfindung betrifft einen optoelektronischen Sensor und ein Verfahren zum Überwachen eines Überwachungsbereichs nach dem Oberbegriff von Anspruch 1 beziehungsweise 10.

Eine große Gruppe von optoelektronischen Sensoren basiert auf der Erkennung einer Strahlunterbrechung. Lichtschranken überwachen nur punktuell in einer Dimension, während mit einem Lichtgitter, das praktisch aus einer Vielzahl von Lichtschranken besteht, auch eine flächige Überwachung möglich wird. Ein Einsatzgebiet ist die Automatisierung, wo die Strahlunterbrechung ein Ereignis wie einen Bearbeitungsschritt oder ein Ausschleusen aus einem Förderstrom auslöst und ein Lichtgitter eine Höhenmessung vornehmen kann. Besonders Lichtgitter werden auch häufig genutzt, um Gefahrenbereiche vor Eingriffen zu schützen. Das kann beispielsweise eine Maschine wie eine Presse sein, deren Arbeitsgang sofort gestoppt werden muss, wenn Bedienpersonal der Maschine zu nahe kommt. Das Lichtgitter bildet dabei eine virtuelle Wand, deren Berührung ein Warn-, meist direkt ein Ausschaltsignal erzeugt.

Das vergleichsweise einfache Detektionsprinzip eröffnet Möglichkeiten, den Sensor absichtlich oder versehentlich zu manipulieren und so den eigentlichen Überwachungsbereich unerkannt zu verschieben. Besonders in der Sicherheitstechnik darf dies nicht geschehen, da dann Verletzungen nicht mehr zuverlässig verhindert werden. Deshalb schreiben Sicherheitsnormen, etwa die IEC 61496-2, zusätzlich vor sicherzustellen, dass den Lichtempfänger nicht versehentlich Licht auf anderem als dem direkten Weg erreicht. Das kann mittels einer Umspiegelung durch eine reflektierende Fläche außerhalb des Überwachungsbereichs oder andere optische Elemente wie Lichtleiter geschehen. Derartige Manipulationen des Überwachungsfeldes wie Umspiegelung oder Strahlversatz durch geeignete optische Bauelemente und Aufbauten sind nicht einfach und kostengünstig feststellbar.

Eine übliche Maßnahme ist die Einhaltung von sehr kleinen sende- und empfangsseitigen Öffnungswinkeln beispielsweise mit Hilfe von Blenden. Das hat aber den Nachteil, dass eine entsprechend genaue Justierung erforderlich ist, welche das Einrichten sehr aufwändig macht. Die Schwierigkeit der Justierung erhöht sich noch, wenn Infrarotlicht verwendet wird, so dass die Strahlen nicht sichtbar sind. Die EP 1 947 481 B1 schlägt vor, nur den empfangsseitigen Öffnungswinkel zu begrenzen, dafür aber besonders stark. Das macht das Lichtgitter umspiegelungssicher im Sinne der Sicherheitsnormen, deckt aber die Manipulation selbst nicht auf.

Die EP 0 875 873 B1 schlägt zur Erhöhung der Umspiegelungssicherheit einen ortsauflösenden Lichtempfänger vor, wobei in einem Einlernvorgang die Sollposition des empfangenen Lichts auf dem Lichtempfänger bestimmt wird. Der Sensor schaltet, wenn die Empfangsposition im Betrieb zu weit von dieser Sollposition abweicht, weil davon ausgegangen wird, dass derart versetzt empfangenes Licht nicht auf direktem Weg, sondern nach einer Umspiegelung empfangen wird und der direkte Weg von einem Objekt blockiert ist. Das genügt nicht gegen manche Manipulationen beispielsweise mit mehreren Spiegeln, bei denen die Empfangsposition gar nicht von der Sollposition abweicht.

Es sind auch Lichtgitter bekannt, die zusätzlich zu der Strahlüberwachung den Abstand messen. Damit ließe sich eine Manipulation aus der Veränderung der Wegstrecke aufdecken, die das Licht auf dem Überwachungsstrahl zurücklegt. Für eine solche Messung ist jedoch eine genaue Synchronisation zwischen Sender und Empfänger notwendig. Typischerweise sind aber die Sende- und Empfangseinheit nicht elektrisch miteinander verbunden, und somit ist eine solche Synchronisation nicht einfach möglich.

Beispielsweise aus der WO 2012/110924 A1 ist ohne jeden Bezug zu Lichtgittern ein Detektor bekannt, der aus der Fokuslage eine Entfernung messen kann. Dieser Detektor basiert auf einem besonderen Effekt beispielsweise in organischen Solarzellen, deren Ausgangssignal trotz gleicher einfallender Lichtmenge eine Abhängigkeit von der Geometrie des Lichtflecks auf der Solarzelle aufweist. Dieser Effekt wird auch als FiP-Effekt bezeichnet (ein Kürzel für den Strahlquerschnitt Φ und die elektrische Leistung P) und der Detektor dementsprechend FiP-Sensor genannt.

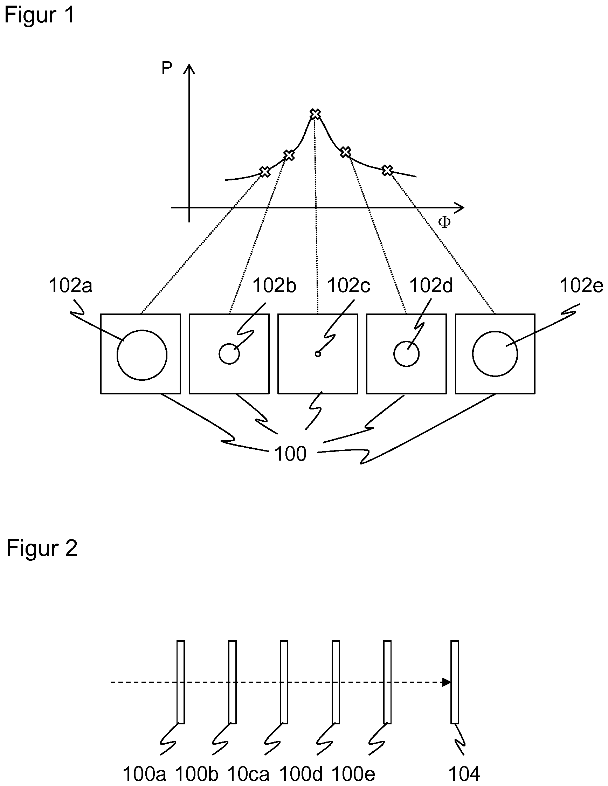

Das Messprinzip soll anhand der Figur 1 erläutert werden. Für weitere Details, insbesondere geeignete Materialien und konkrete Ausgestaltungen eines FiP-Sensors, wird auf die WO 2012/110924 A1 verwiesen. Im unteren Teil zeigt die Figur 1 die Detektorfläche eines FiP-Sensors 100 in der Draufsicht in mehreren, hier beispielhaft fünf, Situationen mit einem Lichtfleck 102a-e unterschiedlicher Größe. Der Lichtfleck 102a-e ist von einem über eine Empfangsoptik einfallenden Lichtstrahl erzeugt und variiert wegen der unterschiedlichen Fokuslagen mit der Entfernung der erzeugenden Lichtquelle. Zunächst ist also bei geringem Abstand der Lichtfleck 102a relativ weit aufgestreut, wird dann über einen kleiner werdenden Lichtfleck 102b zu einem kleinen Lichtfleck 102c bei scharfer Abbildung und wird dann mit zunehmender Entfernung wieder zu einem größeren Lichtfleck 102d-e.

Dabei ist die integrierte einfallende Lichtintensität in allen Entfernungen die gleiche und daher keine geeignete Messgröße für eine Abstandsbestimmung. Das Signal des FiP-Sensors 100 ist jedoch abhängig von der Geometrie, also insbesondere dem Durchmesser des Lichtflecks 102a-b. Das ist im oberen Teil der Figur 1 illustriert, in dem die Ausgangsleistung P des FiP-Sensors 100 in Abhängigkeit vom Strahlquerschnitt Φ gezeigt ist. Die fünf unten illustrierten Situationen mit unterschiedlichen Lichtflecken 102a-e sind darin als Messpunkte eingetragen. Es ergibt sich ein klares Maximum bei kleinstem Strahlquerschnitt, mit entsprechendem Abfall zu beiden Seiten. Ist diese Charakteristik bekannt, so kann anhand der aktuellen Leistung über den Strahlquerschnitt und die Fokuslage eine Entfernung gemessen werden. Bei einem konventionellen Detektor würde man im Gegensatz zu Figur 1 eine flache Charakteristik erwarten, da das Empfangssignal herkömmlich nur von der einfallenden Lichtmenge abhängt. Der FiP-Effekt zeigt im Übrigen noch eine Abhängigkeit von der Modulationsfrequenz des Sendelichts, auf die hier nicht näher eingegangen wird.

Die US 2014/0 291 480 A1 offenbart eine Weiterentwicklung des FiP-Sensors. Dabei sind mehrere teiltransparente FiP-Sensoren 100a-e hintereinander wie in einem Stapel angeordnet. Man kann die in Figur 1 aus unterschiedlichen Situationen stammenden Lichtflecken 102a-e auch als diejenigen in ein und derselben Messung auf den FiP-Sensoren 100a-e der Figur 2 verstehen, wenn die Empfangsoptik eine Lichtquelle scharf auf den mittleren FiP-Sensor 100c abbildet. Es kann also die Signalverteilung über die FiP-Sensoren 100a-e ausgewertet werden, um die Fokuslage und daraus die Entfernung zu bestimmen. Der Vorteil der Stapelanordnung ist, dass die mehreren gleichzeitigen Messungen einen relativen Vergleich erlauben, der von variablen Einflüssen wie der Stärke der Lichtquelle, Fremdlicht und dergleichen unabhängig macht. Außerdem ist in Figur 2 noch ein ortsauflösender Lichtempfänger 104 vorgesehen. Er ist am Ende der Stapelanordnung gezeigt, könnte aber auch teiltransparent und weiter vorne angeordnet sein. Über den ortsauflösenden Lichtempfänger 104 kann zusätzlich zu der Entfernung auch eine laterale Position gemessen werden.

Wie schon erwähnt, befassen sich die WO 2012/110924 A1 und die US 2014/0 291 480 A1 nicht mit Lichtgittern, sondern zielen vielmehr auf eine 3D-Kamera. Dort spielen unterbrochene Überwachungsstrahlen oder gar deren Manipulation keine Rolle.

Es ist Aufgabe der Erfindung, die Manipulationserkennung in einem gattungsgemäßen Sensor mit Erkennen von Strahlunterbrechungen zu verbessern.

Diese Aufgabe wird durch einen optoelektronischen Sensor und ein Verfahren zum Überwachen eines Überwachungsbereichs nach Anspruch 1 beziehungsweise 10 gelöst. Der Sensor spannt mit mindestens einem Lichtsender und Lichtempfänger nach Art einer Einweg- oder Reflexionslichtschranke einen Überwachungsstrahl auf, vorzugsweise als Lichtgitter eine Vielzahl von Überwachungsstrahlen. Eine Auswertungseinheit erkennt Unterbrechungen des Überwachungsstrahls, wobei nicht alle Unterbrechungen unzulässig sind, wie beispielsweise bei gezieltem Stummschalten (muting). Dann wird ein Unterbrechungssignal ausgegeben.

Die Erfindung geht nun von dem Grundgedanken aus, einen Lichtempfänger zu verwenden, der die Abhängigkeit des Empfangssignals von der Geometrie entsprechend dem FiP-Effekt zeigt. So wird in dem Empfangssignal eine Information über den von dem Überwachungsstrahl auf dem Lichtempfänger erzeugten Lichtfleck erfasst. Die Abhängigkeit von der Geometrie des Lichtflecks kann man auch so ausdrücken, dass der Lichtempfänger für die Energiedichte des einfallenden Lichts sensitiv ist. Anschaulich gesprochen ändert sich das Empfangssignal auch dann, wenn sich nur die Geometrie des Lichtflecks ändert, insbesondere dessen Flächeninhalt oder Durchmesser, auch bei konstanter Gesamtenergie oder Lichtmenge des einfallenden Überwachungsstrahls. Diese Abhängigkeit besteht vorzugsweise auf ein und demselben Lichtempfangselement, es wird also nicht Licht über mehrere Pixel einer Empfängermatrix verteilt.

Die zusätzliche gewonnene Information des Empfangssignals wird dann für eine Manipulationserkennung genutzt. Dabei werden gezielte und unbeabsichtigte Störungen vereinfachend als Manipulation bezeichnet, also beispielsweise das Umspiegeln mit eigens aufgestellten Reflektoren oder Lichtleitern, aber auch eine unbeabsichtigte Umspiegelung durch eine glänzende Fläche oder eine Dejustage durch Kollision mit dem Sensor. Ein derart manipulierter Überwachungsstrahl wird nicht als unterbrochen erkannt, denn weiterhin erreicht genügend Licht den Lichtempfänger, um beispielsweise eine Empfangsschwelle zu überschreiten. Erkannt wird vielmehr, ob der Lichtfleck sich aufgrund einer Manipulation in seiner Geometrie verändert, was der verwendete Lichtempfänger aufdecken kann, weil sein Empfangssignal eben nicht nur von der einfallenden Lichtmenge abhängt, sondern auch von der Geometrie.

Die Erfindung hat den Vorteil, dass zusätzlich zu der Empfangsintensität mit der Geometrie eine weitere Detektorinformation zur Verfügung steht. Damit können auf kostengünstige und zuverlässige Weise Manipulationen eines Sensors aufgedeckt werden. Der für Geometrieeigenschaften sensitive Lichtempfänger ist kostengünstig und liefert zugleich wertvolle Zusatzinformationen, die eine sichere Erkennung von Umspiegelungen und weiteren Manipulationen möglich macht.

Die Auswertungseinheit ist bevorzugt dafür ausgebildet, aus dem Empfangssignal eine Länge des Lichtwegs des Überwachungsstahls zu bestimmen und eine Manipulation anhand einer Änderung der Länge zu erkennen. Der Lichtfleck unterscheidet sich wegen der Fokuslage und erlaubt daher eine Entfernungsschätzung. Wenn sich folglich ein Lichtsender nicht mehr in gleicher Entfernung befindet, wird das als Manipulation erkannt, wobei eine gewisse Toleranz erlaubt sein kann. In aller Regel verläuft der Überwachungsstrahl im Normalbetrieb direkt, so dass jegliche Manipulation den Lichtweg verlängert, aber erkannt würde auch eine Verkürzung. Für die Entfernungsmessung ist nur ein Lichtempfänger pro Überwachungsstrahl notwendig, anders als beispielsweise bei stereoskopischer Entfernungsmessung.

Der Lichtempfänger weist bevorzugt mehrere teiltransparente Lichtempfangselemente hintereinander auf, wobei jeweils das Empfangssignal eines Lichtempfangselements abhängig von der Geometrie des von dem Überwachungsstrahl auf dem Lichtempfangselement erzeugten Lichtflecks ist. Dieser Lichtempfänger nutzt folglich eine Stapel- oder Hintereinanderanordnung wie einleitend anhand der Figur 2 erläutert. Dadurch wird eine wesentlich präzisere Auswertung der Geometrieinformationen ermöglicht. Ein Einlernen einer den FiP-Effekt beschreibenden absoluten Charakteristik, das bei veränderlichen Umgebungsbedingungen nicht robust wäre, ist nicht mehr erforderlich.

Der Lichtempfänger weist vorzugsweise mindestens ein Lichtempfangselement auf, das eine laterale Position des Lichtflecks bestimmt. Dieses ortsauflösende Lichtempfangselement kann beispielsweise ein PSD (position sensitive element) oder eine pixelaufgelöste Empfängermatrix sein. Die Anordnung kann bevorzugt vorne oder hinten, aber auch an anderer Position eines Stapels von Lichtempfangselementen mit von der Geometrie des Lichtflecks abhängigem Empfangssignal sein. Damit wird die Entfernungsinformation um eine laterale Positionsbestimmung ergänzt. Für eine Erkennung von Strahlunterbrechung und Manipulation stehen nun als Detektorinformationen die Geometrie des Lichtflecks, insbesondere eine Entfernung des Lichtsenders, die Lage des Lichtflecks, insbesondere die Einfallsrichtung des Überwachungsstrahls, und die Empfangsintensität zur Verfügung.

Die Auswertungseinheit ist bevorzugt dafür ausgebildet, eine Manipulation aus einer Veränderung der lateralen Position des Lichtflecks zu erkennen. Ein manipulierter Überwachungsstrahl trifft in aller Regel nicht am selben Ort auf, wie der eigentlich gewünschte direkte Überwachungsstrahl. Besonders verlässlich ist die Auswertung sowohl einer Geometrieveränderung als auch eine Veränderung der lateralen Position, speziell sowohl einer Abstands- als auch Richtungsänderung.

Die Auswertungseinheit ist bevorzugt dafür ausgebildet, in einer Einlernphase das ohne Manipulation zu erwartende Empfangssignal einzulernen und als Referenz zu speichern. Das bezieht sich nicht nur auf die Empfangsintensität und daraus abgeleitete Empfangsschwellen zur Erkennung von Strahlunterbrechungen. Vielmehr wird so auch die Geometrie des Lichtflecks, insbesondere eine Sollentfernung des Lichtsenders, und gegebenenfalls dessen laterale Position und damit die Einfallsrichtung eingelernt.

Der Lichtsender ist bevorzugt dafür ausgebildet, das Licht des ausgesandten Überwachungsstrahls zu modulieren. Eine solche Modulation unterstützt zunächst einmal den FiP-Effekt, der wie einleitend erwähnt von der Modulationsfrequenz abhängt. Es sollte also eine geeignete Modulation für einen ausreichend starken FiP-Effekt gewählt werden. Die Modulation kann aber auch zur Strahlcodierung genutzt werden, damit ein Lichtempfänger den ihm zugeordneten Lichtsender anhand des Überwachungsstrahls erkennt. Schließlich dient eine Modulation auch der Störunterdrückung, beispielsweise durch Lock-In-Verstärkung auf die bekannte Modulationsfrequenz oder das Ignorieren beziehungsweise Filtern von Gleichlichtanteilen. Eine einfache Modulation mit einer Trägerfrequenz kann auch durch eine echte Codierung überlagert oder ersetzt sein.

Der Lichtempfänger weist bevorzugt mindestens eine organische oder anorganische Solarzelle auf. Derartige Solarzellen (DSC, Dye Sentisized Solar Cell) zeigen einen ausgeprägten FiP-Effekt. Zur konkreten Ausgestaltung wird nochmals auf die WO 2012/110924 A1 verwiesen, wobei der Lichtempfänger und speziell die Solarzelle nicht auf die dort beschriebenen Möglichkeiten beschränkt ist. Es kommt letztlich nur darauf an, dass bei dem verwendeten Lichtempfänger der FiP-Effekt auftritt.

Der Lichtempfänger oder eine Empfangsoptik des Lichtempfängers weist bevorzugt einen Öffnungswinkel auf, der größer ist als von Sicherheitsstandards zur Einhaltung der Umspiegelungssicherheit gefordert. Die Norm begrenzt die Öffnungswinkel, um eine ungewollte Umspiegelung durch glänzende Flächen zu vermeiden. Die Umspiegelungssicherheit ist aber erfindungsgemäß auf andere Weise gewährleistet. Dadurch werden größere Öffnungswinkel auf Sende- und/oder Empfangsseite möglich, und der Sensor lässt sich deshalb besonders einfach justieren.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Darstellung des Empfangssignals für verschiedene Geometrien von Lichtflecken auf einem Lichtempfänger zur Erläuterung des FiP-Effekts;
- Fig. 2: eine schematische Darstellung einer Weiterbildung eines FiP-Sensors als Stapelanordnung;
- Fig. 3: eine schematische Darstellung eines Lichtgitters;
- Fig. 4a: eine schematische Darstellung eines Überwachungsstrahls ohne Manipulation mit zugehörigem Lichtfleck auf dem Lichtempfänger;

- Fig. 4b: eine schematische Darstellung eines durch mehrere Umlenkspiegel manipulierten Überwachungsstrahls mit zugehörigem Lichtfleck auf dem Lichtempfänger; und
- Fig. 4c: eine schematische Darstellung eines durch eine glänzende Fläche umspiegelnden Überwachungsstrahls mit zugehörigem auch lateral verschobenen Lichtfleck auf dem Lichtempfänger.

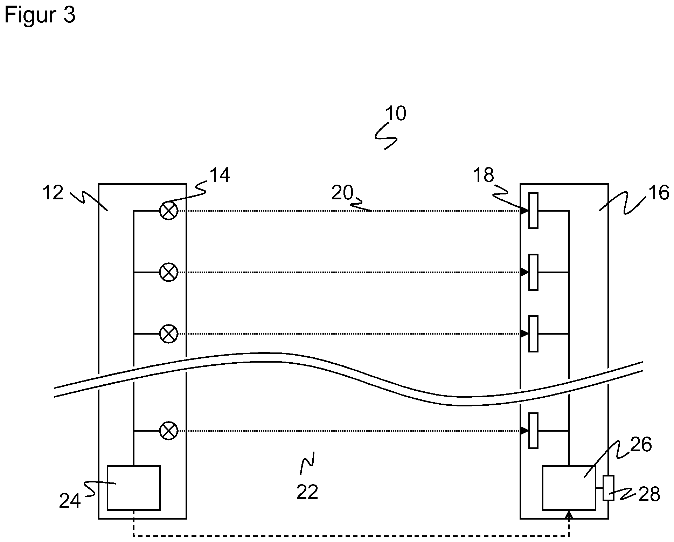

Figur 3 zeigt eine schematische Schnittdarstellung durch ein Lichtgitter 10. Eine Sendeeinheit 12 mit einer Vielzahl von Lichtsendern 14 und eine Empfangseinheit 16 mit einer Vielzahl von Lichtempfängern 18 sind einander gegenüberstehend angeordnet. Den Lichtsendern 14 und Lichtempfängern 18 kann eine Sendeoptik beziehungsweise Empfangsoptik zugeordnet sein, die im Folgenden meist nicht eigens erwähnt wird. Von den Lichtsendern 14 wird jeweils ein Licht- oder Überwachungsstrahl 20 zu einem zugeordneten Lichtempfänger 18 ausgesandt. Somit spannt das Lichtgitter 10 eine Vielzahl von Überwachungsstrahlen 20 auf, um Objekte in einem Überwachungsbereich 22 zwischen der Sendeeinheit 12 und der Empfangseinheit 16 zu erkennen.

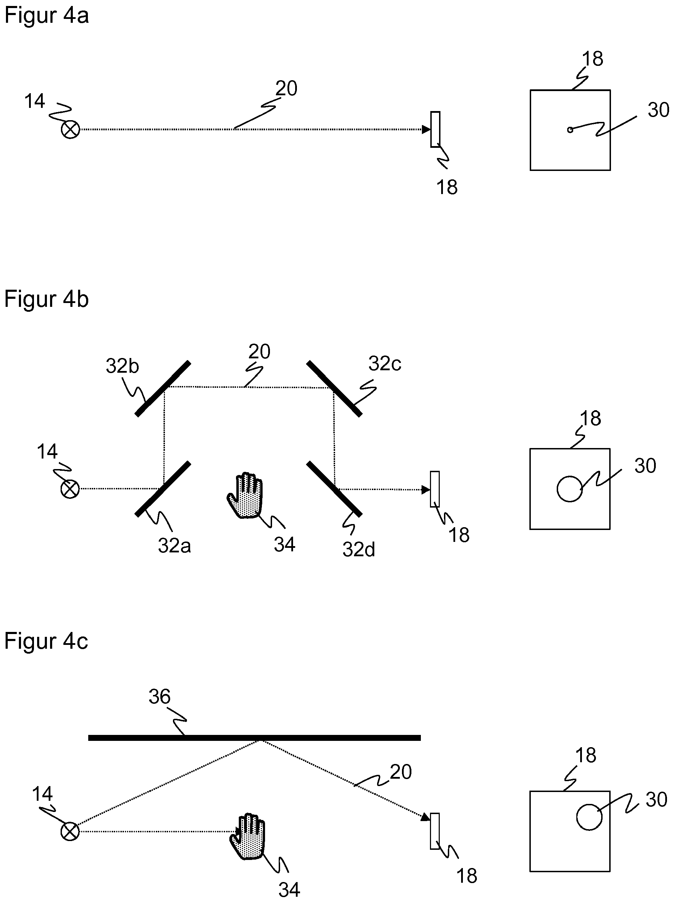

Die Lichtempfänger 18 sind derart ausgebildet, dass ihr Empfangssignal von der Geometrie eines Lichtflecks abhängig ist, der von dem Überwachungsstrahl 20 erzeugt wird. Es handelt sich also bei den Lichtempfängern 18 um FiP-Sensoren. Dabei sind die verschiedenen einleitend anhand der Figuren 1 und 2 erläuterten Ausführungsformen denkbar, und ergänzend sind auch weitere Ausgestaltungen nach WO 2012/110924 A1 oder US 2014/0 291 480 A1 möglich. Die Auswertung der durch den FiP-Effekt zugänglichen Geometrieinformation wird erfindungsgemäß für eine Manipulationserkennung genutzt, die weiter unten unter Bezugnahme auf die Figuren 4a-c näher erläutert wird.

In der Sendeeinheit 12 ist eine Sendesteuerung 24 vorgesehen, um die Aktivität der Lichtsender 14 zu steuern. Als Gegenstück ist in der Empfangseinheit 16 eine Auswertungseinheit 26 vorgesehen, um die Empfangssignale auszuwerten. Anhand der Empfangssignale erkennt die Auswertungseinheit 26, welche Überwachungsstrahlen 20 unterbrochen sind und welche nicht. Ein entsprechendes Ausgangssignal wird an einem Ausgang 28 bereitgestellt. Dabei kann es sich beispielsweise um ein binäres Objektfeststellungssignal, um ein Höhenmesssignal, um eine Information, welche Überwachungsstrahlen 20 verletzt sind oder um rohe oder vorverarbeitete Empfangssignale handeln. Speziell in der Sicherheitstechnik ist der Ausgang 28 ein sicherer Ausgang (OSSD, Output Signal Switching Device) im Sinne der Sicherheitsnormen für die Ausgabe eines sicherheitsgerichteten Abschaltsignals, um eine überwachte Gefahrenquelle bei erkanntem Objekteingriff in einen sicheren Zustand zu überführen. Die Auswertungseinheit 26 ist in Figur 3 als zentrale, gemeinsame Auswertungseinheit gezeigt, der die Empfangssignale der einzelnen Lichtempfänger 18 beispielsweise in einem Zeitmultiplexverfahren zugeführt werden. Alternativ können mehrere Auswertungseinheiten für einzelne Überwachungsstrahlen 20 oder Gruppen von Überwachungsstrahlen 20 vorgesehen sein.

Entgegen der vereinfachten Darstellung in Figur 3 überstrahlt der Überwachungsstrahl 20 in den meisten praktischen Fällen mehrere Lichtempfänger 18. Deshalb wird häufig in einem zyklischen Verfahren durch die Überwachungsstrahlen 20 jeweils nur ein Paar von einem Lichtsender 14 und dem zugehörigen Lichtempfänger 18 gleichzeitig betrieben. Diese Zyklen müssen zwischen Sendeeinheit 12 und Empfangseinheit 16 synchronisiert sein, wie durch eine gestrichelte Linie angedeutet ist. Die Synchronisation kann zwar auch leitungsgebunden sein, vorzugsweise wird aber auf optischem Weg synchronisiert. Das ist einfach möglich, weil lediglich der Anfang eines Auswertungszyklus' synchronisiert werden muss.

Außerdem werden die Überwachungsstrahlen vorzugsweise mit einer Modulation ausgesandt und empfangen. Das hat mehrere Gründe: Zunächst ist der FiP-Effekt von der Modulationsfrequenz abhängig, so dass eine geeignete Modulationsfrequenz eingestellt wird, um eine ausreichende Geometrieabhängigkeit des Empfangssignals zu erreichen. Weiterhin kann die Modulation je Überwachungsstrahl 20 variiert werden, insbesondere durch unterschiedliche Modulationsfrequenzen oder eine einer Modulationsfrequenz überlagerte individuelle Codierung, und so als alternatives oder zusätzliches Kriterium genutzt werden, damit die Auswertungseinheit 26 zu einem jeweiligen Lichtempfänger 18 den zugeordneten Lichtsender 14 erkennt und Licht anderer Lichtsender 14 ignoriert. Dies kann etwa bei der Inbetriebnahme eingelernt werden. Schließlich lassen sich durch Modulation auch Störquellen aus dem Messsignal ausfiltern, insbesondere Gleichlichtanteile.

Das Lichtgitter 10 ist ein Beispiel eines optoelektronischen Sensors, bei dem die erfindungsgemäße Manipulationserkennung besonders vorteilhaft eingesetzt werden kann. Die Erfindung ist jedoch darauf nicht beschränkt und auch für andere optoelektronische Sensoren wie beispielsweise Einweg- oder Reflexionslichtschranken und Lichttaster nutzbar. Außerdem ist das Lichtgitter 10 mit einer reinen Sendeeinheit 12 und einer reinen Empfangseinheit 16 gezeigt, in denen jeweils jeder Lichtsender 14 genau einem Lichtempfänger 18 zugeordnet ist. Das ist besonders einfach und wird häufig so genutzt, kann jedoch auch in anderen Ausführungsformen variiert werden, sei es durch gemischte Sende- und Empfängereinheiten, ein tastendes System mit Lichtsendern und Lichtempfängern auf der gleichen Seite und einer passiven Gegenseite oder einer Abweichung der direkten Zuordnung beispielsweise durch Strahlaufspaltung, wodurch es dann ein zahlenmäßiges Ungleichgewicht mit mehr Lichtsendern oder mehr Lichtempfängern geben kann.

Anhand der Figuren 4a-c wird nun die Manipulationserkennung mit Hilfe der als FiP-Sensoren ausgebildeten Lichtempfänger 18 erläutert.

Figur 4a zeigt zunächst einen direkten, nicht manipulierten Überwachungsstrahl 20. Dabei wird lediglich zur Vereinfachung der Darstellung nur noch ein einziger Überwachungsstrahl 20 gezeigt. Wie rechts in der Darstellung des von dem Überwachungsstrahl 20 auf dem Lichtempfänger 18 erzeugten Lichtfleck 30 zu sehen, wird das Lichtgitter 20 vorzugsweise so eingestellt, dass der Lichtfleck 30 in dieser Situation von der Empfangsoptik scharf gestellt und daher klein ist. Das führt mit Blick auf den in Figur 1 gezeigten FiP-Effekt zu einem entsprechend hohen, eindeutig detektierbaren Signal im Normalzustand. Erforderlich ist ein solcher Normalzustand mit kleinem Lichtfleck 30 aber nicht. Vorzugsweise wird der Normalzustand mit allen erforderlichen Informationen über das Empfangssignal und den Lichtfleck 30 in einer Einlernphase bestimmt und als spätere Referenz gespeichert.

Figur 4b zeigt eine Manipulation durch vier Umlenkspiegel 32a-d. Selbstverständlich ist die Anzahl und Anordnung der Umlenkspiegel 32a-d rein beispielhaft, und es sind auch andere Manipulationen durch Lichtleiter und weitere optische Elemente möglich. Ein unzulässig eingreifendes Objekt 34 unterbricht den Überwachungsstrahl 20 nicht mehr und kann daher nicht detektiert werden. Gerade in sicherheitstechnischer Anwendung ist dies ein unbedingt zu vermeidendes Risiko, da der Schutz effektiv außer Kraft gesetzt ist. Die gezeigte Manipulation ist relativ aufwändig, führt aber dazu, dass der Überwachungsstrahl 20 aus derselben Richtung auf den Lichtempfänger 18 fällt wie ein direkter Überwachungsstrahl 20. Die Manipulation ist mit den meisten Verfahren nicht zu bemerken, da sich weder die Einfallsrichtung noch die Gesamtintensität auf dem Lichtempfänger 18 verändert.

Wie allerdings rechts in Figur 4b zu sehen, hat sich die Geometrie des Lichtflecks 30 verändert, insbesondere dessen Fläche oder Durchmesser. Diese Geometrieänderung schlägt sich in dem als FiP-Sensor ausgebildeten Lichtempfänger 18 messbar nieder. Wie schon erwähnt, sind die Überwachungsstrahlen 20 in der Realität keineswegs perfekt kollimiert. Der Querschnitt der Überwachungsstrahlen 20 variiert also mit der Entfernung. Der größere Effekt, der zu Geometrieänderungen des Lichtflecks 30 führt, ist aber die Fokuslage, weil die Empfangsoptik je nach Entfernung des zugehörigen Lichtsenders 14 scharf gestellt oder bei zu großer Nähe oder Entfernung zunehmend unschärfer wird. Somit kann über die Fokuslage auf die Entfernung zu dem Lichtsender 14 rückgeschlossen werden, oder mit anderen Worten die Länge des Überwachungsstrahls 20 gemessen werden, der sich durch die Umspiegelungen verlängert hat. Die Manipulation wird folglich durch Überwachung der Weglänge aufgedeckt.

Figur 4c zeigt eine weitere beispielhafte Manipulation nun durch eine glänzende oder reflektierende Fläche 36. Während eine Manipulation wie in Figur 4b kaum ohne Absicht zustande kommen wird, sind Metallflächen in der Nähe des Lichtgitters 10 auch ohne gezielte Manipulation ohne weiteres denkbar. Prinzipiell geschieht das Gleiche wie in Figur 4b. Obwohl das Objekt 34 den direkten Überwachungsstrahl 20 unterbricht, kann auf dem Umweg über die reflektierende Fläche 36 immer noch Sendelicht zu dem Lichtempfänger 18 gelangen.

Im Gegensatz zu der Umspiegelung nach Figur 4b wird dabei nicht nur die Geometrie des Lichtflecks 30 verändert. Auch die Intensität des auftreffenden Überwachungsstrahls 20 ist wegen der auf dem direkten Weg durch das Objekt 34 blockierten Anteile verringert. Das allein reicht aber nicht zuverlässig für die Erkennung einer Strahlunterbrechung aus, vielmehr hängt dies von zahlreichen Einflüssen wie der Schwellenwahl, dem Öffnungswinkel, dem Strahlquerschnitt und dem Objekt 34 ab. Verändert hat sich aber hier auch die Einfallsrichtung des Überwachungsstrahls 20 auf dem Lichtempfänger 18. Das zeigt sich, wie rechts in Figur 4c zu erkennen, in einer lateralen Verschiebung des Lichtflecks 30, die in einer entsprechenden Ausgestaltung des Lichtempfängers 18 beispielsweise nach Figur 2 ebenfalls detektiert wird. Eine kombinierte Auswertung von Lichtintensität, Geometrie beziehungsweise Entfernung und/oder Einfallsrichtung beziehungsweise lateraler Position führt daher zu einer besonders zuverlässigen Manipulationserkennung.

Auf eine erkannte Manipulation reagiert das Lichtgitter 10 je nach Ausführungsform unterschiedlich. In Automatisierungsanwendungen kann eine Warnung beispielsweise in Form einer Anzeige oder einer Information an ein anderes System wie eine übergeordnete Steuerung ausreichen. In der Sicherheitstechnik sollte eine Manipulation so behandelt werden wie die Erkennung eines unzulässigen Objekteingriffs, nämlich ein sicherheitsgerichtetes Abschaltsignal ausgegeben werden, wobei ein zusätzlicher Hinweis auf die Ursache die nachfolgende erneute Inbetriebnahme erleichtert.

Die erfindungsgemäße Manipulationserkennung ermöglicht eine normgerechte Umspiegelungssicherheit auch bei größeren Öffnungswinkeln der Lichtsender 14 und/oder Lichtempfänger 18 beziehungsweise der zugehörigen Optiken. Das vereinfacht die Justage des Lichtgitters 10 deutlich. Außerdem ist eine elektrische Verbindung zwischen Sender und Empfänger auch für eine Entfernungsmessung nicht nötig, es genügt eine optische Synchronisation der Aktivierungszyklen.

Der Lichtempfänger 18 liefert zusammenfassend in seinem Empfangssignal eine Vielzahl von Informationen. Zum einen kann natürlich wie herkömmlich die Beleuchtungsintensität in dem Lichtfleck variieren. Hinzu kommt aber auch eine geometrische Veränderung bei gleicher integrierter Leistung des einfallenden Überwachungsstrahls 20 des Lichtflecks, die aufgrund des FiP-Effekts erkannt werden kann. Das kann insbesondere für eine Entfernungsmessung genutzt werden. Schließlich steht in entsprechenden Ausführungsformen mit einem ortsauflösenden Empfänger auch die laterale Lichtfleckposition zur Verfügung. Eine Manipulation führt zu einer Veränderung mindestens einer dieser Messinformationen und wird dadurch aufgedeckt. Wenn sich die Intensität, die Fokuslage und die Position entsprechend dem eingelernten Empfangssignal nicht ändern, dann können auch überlagerte Störsignale etwa durch Reflexe, Fremdlichtquellen oder Mehrwegeempfang separiert und unterdrückt werden.

## Patentansprüche

1. Optoelektronischer Sensor (10), insbesondere Lichtgitter, zur Überwachung eines Überwachungsbereichs (22), wobei der Sensor mindestens einen Lichtsender (14) zum Aussenden eines Überwachungsstrahls (20), mindestens einen Lichtempfänger (18) zum Empfangen des Überwachungsstrahls (20) und Erzeugen eines entsprechenden Empfangssignals und eine Auswertungseinheit (26) aufweist, um aus dem Empfangssignal zu erkennen, ob der Überwachungsstrahl (20) unterbrochen ist und bei Erkennen einer unzulässigen Unterbrechung des Überwachungsstrahls (20) ein Unterbrechungssignal auszugeben,
**dadurch gekennzeichnet,**
**dass** der Lichtempfänger (18) derart ausgebildet ist, dass das Empfangssignal abhängig von der Geometrie des von dem Überwachungsstrahl (20) auf dem Lichtempfänger (18) erzeugten Lichtflecks (30) ist, und dass die Auswertungseinheit (26) dafür ausgebildet ist, aus dem Empfangssignal zu erkennen, ob der nicht unterbrochene Überwachungsstrahl (20) manipuliert ist.

2. Sensor (10) nach Anspruch 1,
wobei die Auswertungseinheit (26) dafür ausgebildet ist, aus dem Empfangssignal eine Länge des Lichtwegs des Überwachungsstahls (20) zu bestimmen und eine Manipulation anhand einer Änderung der Länge zu erkennen.

3. Sensor (10) nach Anspruch 1 oder 2,
wobei der Lichtempfänger (18) mehrere teiltransparente Lichtempfangselemente (100a-e) hintereinander aufweist, wobei jeweils das Empfangssignal eines Lichtempfangselements (100a-e) von der Geometrie des von dem Überwachungsstrahl (20) auf dem Lichtempfangselement (100a-e) erzeugten Lichtflecks (30, 102a-e) abhängig ist.

4. Sensor (10) nach einem der vorhergehenden Ansprüche,
wobei der Lichtempfänger (18) mindestens ein Lichtempfangselement (104) aufweist, das eine laterale Position des Lichtflecks (30) bestimmt.

5. Sensor (10) nach Anspruch 4,
wobei die Auswertungseinheit (26) dafür ausgebildet ist, eine Manipulation aus einer Veränderung der lateralen Position des Lichtflecks (30) zu erkennen.

6. Sensor (10) nach einem der vorhergehenden Ansprüche,
wobei die Auswertungseinheit (26) dafür ausgebildet ist, in einer Einlernphase das ohne Manipulation zu erwartende Empfangssignal einzulernen und als Referenz zu speichern.

7. Sensor (10) nach einem der vorhergehenden Ansprüche,
wobei der Lichtsender (14) dafür ausgebildet ist, das Licht des ausgesandten Überwachungsstrahls (20) zu modulieren.

8. Sensor (10) nach einem der vorhergehenden Ansprüche,
wobei der Lichtempfänger (18) mindestens eine organische oder anorganische Solarzelle aufweist.

9. Sensor (10) nach einem der vorhergehenden Ansprüche,
wobei der Lichtempfänger (18) oder eine Empfangsoptik des Lichtempfängers (18) einen Öffnungswinkel aufweist, der größer ist als von Sicherheitsstandards zur Einhaltung der Umspiegelungssicherheit gefordert.

10. Verfahren zur Überwachung eines Überwachungsbereich (22), wobei von einem Lichtsender (14) ein Überwachungsstrahl (20) zu einem Lichtempfänger (18) gesandt wird, der daraus ein Empfangssignal erzeugt, und wobei das Empfangssignal ausgewertet wird, um zu erkennen, ob der Überwachungsstrahl (20) unterbrochen ist und bei Erkennen einer unzulässigen Unterbrechung des Überwachungsstrahls (20) ein Unterbrechungssignal auszugeben,
**dadurch gekennzeichnet,**
**dass** das Empfangssignal von der Geometrie eines von dem Überwachungsstrahl (20) auf dem Lichtempfänger (18) erzeugten Lichtflecks (30) abhängig ist und dass aus dem Empfangssignal erkannt wird, ob der nicht unterbrochene Überwachungsstrahl (20) manipuliert ist.
